# EUROPÄISCHE PATENTANMELDUNG

(11) **EP 3 241 876 A1**
(43) Veröffentlichungstag der Anmeldung: **08.11.2017**
(21) Anmeldenummer: 17159506.9
(22) Anmeldetag: 07.03.2017
(51) Int. Cl.: C09J 7/02, C09J 7/04

(54) **ABDECK-KLEBEBANDSYSTEM**

(30) Priorität: 04.05.2016 DE 102016108328
(71) Anmelder: GIMA Gipser- und Malerbedarf GmbH & Co. Groß- und Einzelhandels KG, 91567 Herrieden-Neunstetten (DE)
(72) Erfinder: Zahner, Roman, 91567 Herrieden (DE)
(74) Vertreter: Lindner Blaumeier Patent- und Rechtsanwälte

(57) **Zusammenfassung**

Abdeck-Klebebandsystem, umfassend zwei zu Rollen (11a, 11 b) gewickelte Abdeck-Klebebänder (7a, 7b) jeweils umfassend einen Klebebandabschnitt (8a, 8b) mit einer eine Klebeschicht (12a, 12b) aufweisenden Seite und einen an dem Klebebandabschnitt (8a, 8b) angeordneten gefalteten Abdeckfolienabschnitt (13a, 13b), wobei die Abdeck-Klebebänder (7a, 7b) über die Klebeschicht (12a, 12b) an einem Drittgegenstand anklebbar sind, und wobei die Abdeck-Klebebänder (7a, 7b) mit unterschiedlichen Wickelrichtungen zu den beiden Rollen aufgewickelt sind.

## Beschreibung

Die Erfindung betrifft ein Abdeck-Klebebandsystem.

Abdeck-Klebebänder werden in verschiedenen Bereichen angewendet. Ein bekanntes Beispiel ist der Baubereich, wo solche Abdeck-Klebebänder häufig dazu verwendet werden, bauwerkseitig bereits verbaute Fenster oder Türen abzudecken, wenn nachfolgend noch beispielsweise Verputz- oder Malerarbeiten anstehen. Ein solches Abdeck-Klebeband umfasst einen Klebebandabschnitt mit einer eine Klebeschicht aufweisenden Seite und einen an dem Klebebandabschnitt angeordneten, gefalteten Abdeckfolienabschnitt. Das Abdeck-Klebeband kann über die Klebeschicht an einem Drittgegenstand, im obigen Beispiel einem Fenster- oder Türrahmen, angeklebt werden. Anschließend wird der gefaltete Abdeckfolienabschnitt zur Seite herausgezogen und über das Fenster oder die Tür gespannt respektive daran fixiert.

Bekannte derartige Abdeck-Klebebänder sind zu einer Rolle gewickelt und weisen üblicherweise eine Länge von mehreren Metern auf. Diese Rollen sind stets so gewickelt, dass der Arbeiter den Klebebandabschnitt im rechten oberen Rahmeneck der Tür oder des Fensters ankleben kann und durch Ziehen der Rolle nach unten das Abdeck-Klebeband von der Rolle abwickeln und gleichzeitig mit der freien Hand den Klebebandabschnitt gegen den Rahmen drücken respektive daran entlang fahren kann. Er arbeitet also von oben nach unten, was einfach ist, da insbesondere das Abrollen bei einer Bewegung von oben nach unten sehr leicht vonstatten geht. Soll jedoch das Abdeck-Klebeband an einer linken Rahmenseite befestigt werden, so kann dies nur bewerkstelligt werden, indem der Klebebandabschnitt im linken unteren Rahmeneck angeklebt wird und der Arbeiter die Rolle nach oben bewegt, um das Abdeck-Klebeband von der Rolle abzuwickeln. Gleichzeitig muss er hierbei den Klebebandabschnitt am Rahmen andrücken. Dies ist jedoch sehr umständlich, insbesondere da er die Rolle häufig ein Stück weit über das obere Rahmenende hinausbewegen muss, um hinreichend abgewickeltes Klebeband zur Verfügung zu haben.

Der Erfindung liegt damit das Problem zugrunde, eine Möglichkeit anzugeben, die ein einfaches Anbringen eines solchen Abdeck-Klebebands ermöglicht.

Zur Lösung dieses Problems ist erfindungsgemäß ein Abdeck-Klebebandsystem vorgesehen, umfassend zwei zu Rollen gewickelte Abdeck-Klebebänder jeweils umfassend einen Klebebandabschnitt mit einer eine Klebeschicht aufweisenden Seite und einen an dem Klebebandabschnitt angeordneten gefalteten Abdeckfolienabschnitt, wobei die Abdeck-Klebebänder über die Klebeschicht an einem Drittgegenstand anklebbar sind, und wobei die Abdeck-Klebebänder mit unterschiedlichen Wickelrichtungen zu den beiden Rollen aufgewickelt sind.

Das erfindungsgemäße Abdeck-Klebebandsystem respektive ein ein solches System oder eine solche Klebebandeinheit bildendes Rollenpaar umfasst zwei separate zu Rollen gewickelte Abdeck-Klebebänder, die vom Grundaufbau her identisch sind, also jeweils aus einem Klebebandabschnitt und einem daran angeordneten gefalteten Abdeckfolienabschnitt bestehen. Sie unterscheiden sich jedoch in der Wickelrichtung. Wenn also die eine Rolle quasi "auf rechts" gewickelt ist, ist die andere Rolle quasi "auf links" gewickelt.

Die eine Rolle ist demzufolge zum rechtsseitigen Ankleben an dem Tür- oder Fensterrahmen vorgesehen. Sie ist so gewickelt, dass der Handwerker den Klebebandabschnitt im rechten oberen Eck ankleben kann und durch Bewegen der Rolle nach unten das Abdeck-Klebeband abwickeln kann und gleichzeitig mit der freien Hand durch Bewegen von oben nach unten den Klebebandabschnitt am Rahmen festdrücken kann.

Die zweite Rolle ist hingegen zum linksseitigen Ankleben an einem Tür- oder Fensterrahmen gewickelt. Sie ist so gewickelt, dass der Handwerker den Klebebandabschnitt im linken oberen Rahmeneck ankleben kann und durch Bewegen der Rolle von oben nach unten das Abdeck-Klebeband abwickeln und gleichzeitig mit der freien Hand den Klebebandabschnitt gegen den linken Rahmen drücken kann.

Durch Zurverfügungstellen der beiden unterschiedlich gewickelten Rollen ist es somit möglich, für die jeweilige Montagesituation eine Rolle verarbeiten zu können, die in einfacher Weise durch Abrollen von oben nach unten montiert werden kann. Das heißt, dass auch ein linksseitiges Montieren in gleicher einfacher Weise mit der hierzu vorgesehenen Rolle möglich ist, wie ein bisher mögliches rechtsseitiges Montieren mit der zweiten, hierzu spezifisch vorgesehenen Rolle. Die Montage wird hierdurch insgesamt vereinfacht und kann auch schneller vonstatten gehen, da für den jeweiligen Montagefall die spezifisch gewickelte Rolle zur Verfügung steht.

Die Rollen sind bevorzugt so gewickelt, dass die nicht klebende Seite der Klebebandabschnitte auf die Außenseite der jeweiligen Rolle gewickelt ist. Hierdurch ist sichergestellt, dass die Außenseite der Rolle stets nicht haftet respektive auch kein entsprechendes die Klebeschicht schützendes Abdeckpapier oder dergleichen vorzusehen ist.

Eine zweckmäßige Weiterbildung der Erfindung sieht vor, dass an der nicht klebenden Seite eines Klebebandabschnitts oder beider Klebebandabschnitte und/oder einem Abdeckfolienabschnitt oder beiden Abdeckfolienabschnitten wenigstens eine Markierung vorgesehen ist. Es erfolgt also erfindungsgemäß eine entsprechende Kennzeichnung wenigstens einer der beiden unterschiedlichen Rollen, so dass dem Handwerker sofort klar ist, ob die Rolle nun zur Montage am rechten Rahmenabschnitt oder am linken Rahmenabschnitt vorgesehen ist. Bereits die Kennzeichnung nur eines Rolle ist ausreichend. Bevorzugt sind beide Klebebandabschnitte und/oder beide Abdeckfolienabschnitte mit einer Markierung versehen. Die eine oder die verschiedenen Kennzeichnungen sind intuitiv und eindeutig am jeweiligen Klebebandabschnitt respektive dem Abdeckfolienabschnitt aufgebracht, so dass es zu keinen Verwechslungen kommen kann.

Eine solche Markierung oder die unterschiedliche Markierungen können beispielsweise in Form einer Farbe und/oder wenigstens eines Buchstabens und/oder wenigstens eines Symbols vorgesehen sein, wobei sich bei Markierung beider Rollen die verwendeten Farben, Buchstaben oder Symbole natürlich unterscheiden.

Denkbar ist es beispielsweise die Außenseite der jeweiligen Klebebandschnitte unterschiedlich zu färben oder zu bedrucken. Beispielsweise ist der Klebebandabschnitt einer für den rechten Rahmen vorgesehenen Rolle außenseitig blau, während ein Klebebandabschnitt einer für den linken Rahmenbereich vorgesehene Rolle rot ist. Alternativ oder zusätzlich können auch entsprechende Buchstaben aufgebracht, beispielsweise aufgedruckt sein, beispielsweise ein "R" für eine für den rechten Rahmenrand vorgesehenen Rolle und ein "L" für eine dem linken Rahmenrand zugeordnete Rolle. Neben Farben oder Buchstaben können auch andere Symbole zur Unterscheidung der Rollen aufgebracht sein, beispielsweise in Form von Kreisen, Vierecken oder dergleichen.

Alternativ oder zusätzlich kann vorgesehen sein, dass die beiden Klebeschichten unterschiedlich gefärbt sind. Auch über eine solche Farbcodierung kann eine eindeutige Kennzeichnung der jeweiligen Rolle erfolgen. Z.B. ist die eine Klebeschicht eingefärbt, während die andere transparent ist, z.B. bei Verwendung eines Silikons als Klebeschichtmittel. Natürlich können auch beide Klebeschichten gefärbt sein. Das Einfärben ist ohne weiteres durch Zumischen eines geeigneten Farbpigments zum Klebemittel, z.B. einem Silikonklebstoff, möglich.

Die Klebebandabschnitte können aus einem geschäumten Kunststoffmaterial oder einem Gewebeband sein, das einseitig mit der Klebeschicht oder einem doppelseitig klebenden Klebestreifen belegt ist. Wird ein geschäumtes Kunststoffmaterial verwendet, so kann ein beliebiger schäumbarer Kunststoff das Basismaterial bilden. Wird ein Gewebeband verwendet, so kann dieses beispielsweise aus Polyester und Baumwolle bestehen, beispielsweise zu ca. 65% aus Polyester und zu ca. 35% aus Baumwolle, wobei diese Materialen zu einem Band gewebt sind. Die Verklebung wird über eine aufgebrachte Klebeschicht realisiert, wobei die Klebeschicht beispielsweise aus einem Naturkautschuk sein kann. Es kann sich aber auch um ein polymeres Klebemittel handeln. Die Klebeschicht selbst sollte eine gewisse Dicke aufweisen, beispielsweise zwischen 0,3 - 3 mm, um etwaige Unebenheiten oder Strukturen des Untergrunds, also des Rahmens, ausgleichen zu können. Neben einer solchen Klebeschicht kann die Fixierung auch über einen doppelseitig klebenden Klebestreifen, der auf dem Klebebandabschnitt respektive dem Kunststoffmaterial oder Gewebeband aufgeklebt ist, realisiert werden.

Weisen die Klebebandabschnitte jeweils Gewebebänder auf, so können zur Markierung der verschiedenen Rollen verschieden farbige Gewebebänder verwendet werden. Z.B. ist das eine Gewebeband rot oder blau, während das andere nicht gefärbt ist oder grün oder gelb ist. Solche farbigen Klebebänder sind einfach herstellbar, so dass von Haus aus entsprechend farbige Gewebebänder verwendet werden können. Ebenso können die Gewebebände bereits bei der Herstellung mit wenigstens einem Buchstaben oder wenigstens einem Symbol bedruckt werden, so dass entsprechend gekennzeichnete Gewebebänder im Rahmen der Herstellung der jeweiligen Rolle verwendet werden können.

Der Klebebandabschnitt selbst kann eine Breite von wenigstens 10 mm, insbesondere von wenigstens 15 mm bis maximal 50 mm, insbesondere maximal 40 mm aufweisen. Die Auszugslänge des ausziehbaren Folienabschnitts kann ebenfalls mehrere Meter betragen, wobei dieser Folienabschnitt möglichst kleinformatig gefaltet wird, so dass die Rollenbreite nicht allzu groß wird.

Weitere Vorteile und Einzelheiten der Erfindung ergeben sich aus dem im folgenden beschriebenen Ausführungsbeispiel sowie anhand der Zeichnung. Dabei zeigen:
- Fig. 1: eine Prinzipdarstellung eines in einer Fensterlaibung verbauten Fensters mit einem rahmenseitig rechts angeklebten Abdeck-Klebeband,
- Fig. 2: ein erfindungsgemäßes Abdeck-Klebebandsystem mit zwei mit verschiedenen Wickelrichtungen gewickelten Rollen aus Abdeck-Klebeband in Form einer Prinzipdarstellung,
- Fig. 3: eine Darstellung entsprechend Fig. 1 mit einem linksseitig am Rahmen angeordneten Abdeck-Klebeband, und
- Fig. 4: ein erfindungsgemäßes Abdeck-Klebebandsystem einer zweiten Ausführungsform.

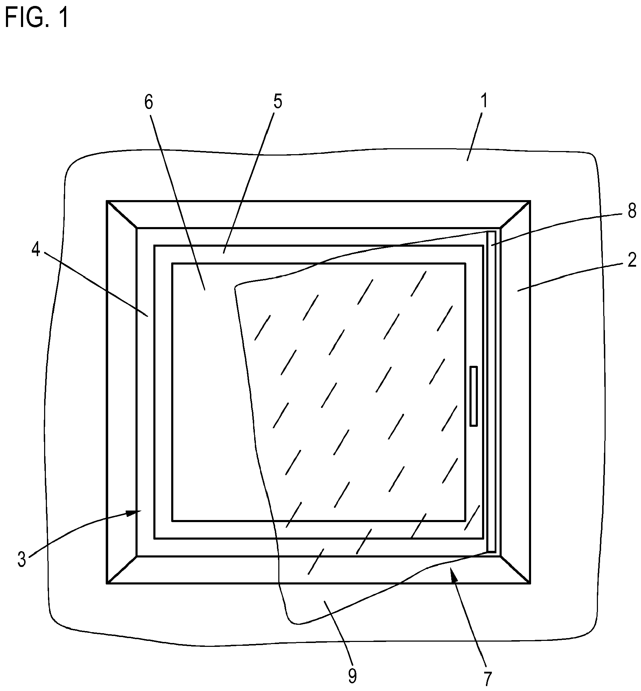

Fig. 1 zeigt ein Mauerwerk 1 mit einer Fensterlaibung 2, in der ein Fenster 3 umfassend einen Rahmen 4 sowie einen Schwenkflügel 5 mit darin angeordneter Fensterscheibe 6 verbaut ist. Es sei angenommen, dass der Wandbereich respektive der Laibungsbereich noch zu verputzen oder zu streichen ist. Aus diesem Grund soll das Fenster 3 aus Schutzgründen abgedeckt werden, wozu ein Abdeck-Klebeband 7 vorgesehen ist. Dieses Abdeck-Klebeband 7 weist einen Klebebandabschnitt 8 auf, der eine in Fig. 1 nicht näher gezeigte Klebeschicht aufweist, über die er am rechten Rand des Fensterrahmens 4 vertikal von oben nach unten angeklebt ist. An diesen Klebebandabschnitt schließt sich ein Abdeckfolienabschnitt 9 an, der in der Ausgangsform zusammengefaltet ist, jedoch aus dieser zusammengefalteten Stellung auseinander gezogen werden kann, so dass er über das Fenster 3 gespannt und an entsprechenden Klebestellen fenster- oder fensterrahmenseitig fixiert werden kann.

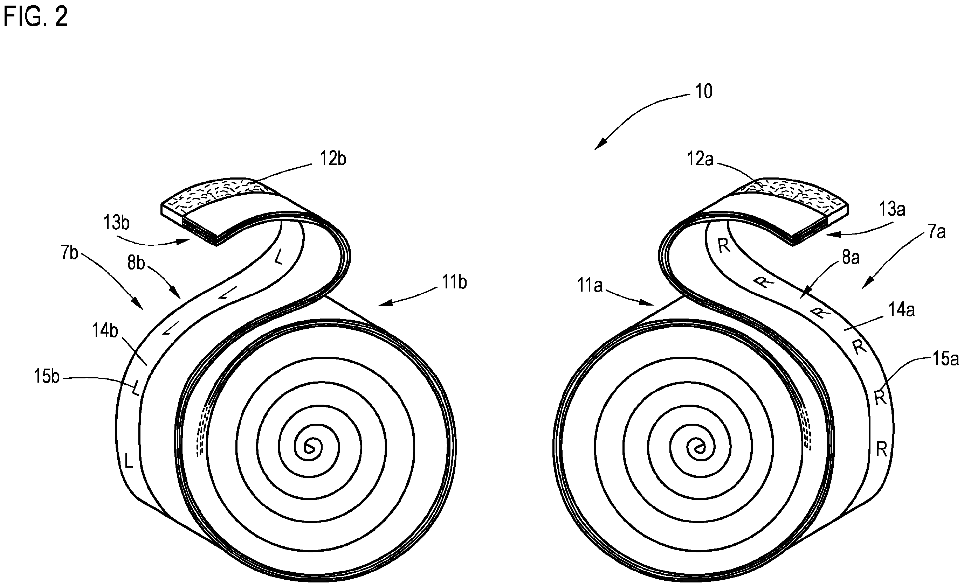

Ein erfindungsgemäßes Abdeck-Klebebandsystem 10 ist in Fig. 2 in Form einer ersten Ausführungsform gezeigt. Es umfasst zwei Rollen 11 a und 11 b, jeweils aus einem Abdeck-Klebeband 7a, 7b. Jedes Abdeck-Klebeband 7a, 7b besteht, ähnlich wie zu Fig. 1 beschrieben, aus einem Klebebandabschnitt 8a, 8b, der beispielsweise aus einem geschäumten Kunststoffmaterial oder einem Gewebeband besteht. Die Innenseite, die an der jeweiligen Rolle 11a, 11 b nach innen gewickelt ist, ist jeweils mit einer Klebeschicht 12a, 12b versehen, bei der es sich beispielsweise um einen Klebebelag aus einem Naturkautschuk oder einem synthetischen Kleber handelt. Die Klebeschicht 12a, 12b sollte eine entsprechende Dicke aufweisen, um entsprechende Rahmenunebenheiten auszugleichen.

Wie Fig. 2 ferner zeigt, sind an jedem Klebebandabschnitt 8a, 8b die Abdeckfolienabschnitte 13a, 13b angeordnet und, wie Fig. 2 deutlich zeigt, im Ausgangszustand, also im auf Rolle gewickelten Zustand, zusammengefaltet. Wenngleich hier nur wenige Faltebenen gezeigt sind, kann jeder Abdeckfolienabschnitt beliebig oft gefaltet sein, damit er die entsprechende Auszugslänge aufweist. Da die Abdeckfolien sehr dünn sind, ist eine häufige Faltung ohne allzu dicken Aufbau ohne weiteres möglich.

Wie Fig. 2 deutlich zeigt, sind die Abdeck-Klebebänder 8a, 8b vom Aufbau her identisch, jedoch mit unterschiedlichen Richtungen aufgewickelt. Während sich, bezogen auf die aufgewickelte Rolle, bei der Rolle 11a der Klebebandabschnitt 8a rechts befindet, befindet sich der Klebebandabschnitt 8b auf der Rolle 11 b links. Die Rolle 11 a ist zum rechtsseitigen Anbringen an einem Tür- oder Fensterrahmen vorgesehen, während die Rolle 11 b zum linksseitigen Anbringen an einem Tür- oder Fensterrahmen vorgesehen ist. Um dem Handwerker die Möglichkeit zu geben, dies sofort zu erkennen, sind die beiden Klebebandabschnitte an ihrer jeweiligen Außenseite 14a, 14b jeweils mit einer Markierung 15a, 15b versehen, wobei die Markierungen in Fig. 2 in Form von Buchstaben gewählt sind. Auf der Rolle 11a ist die Markierung "R" außenseitig aufgebracht, beispielsweise aufgedruckt, wobei eine Vielzahl solcher Markierungen 15a über die gesamte Länge des Klebebandabschnitts 8a aufgebracht sind. Die Rolle 11 b ist mit den Markierungen "L" versehen, die ebenfalls über die gesamte Länge des Klebebandabschnitts 8b außenseitig aufgebracht sind. Anhand dieser Markierungen "R" und "L" kann der Handwerker sofort erkennen, welche der Rollen für das rechtsseitige oder das linksseitige Ankleben vorgesehen ist.

Die unterschiedlichen Wickelrichtungen ermöglichen es, dass die Rolle 11 a an der rechten Rahmenseite und die Rolle 11 b an der linken Rahmenseite dadurch angebracht werden können, dass sie von oben nach unten abgerollt werden. Ausgehend von der Prinzipdarstellung gemäß Fig. 1, in der das Abdeck-Klebeband rechtsseitig angeklebt ist, wird der Fachmann innerhalb des Abdeck-Klebebandsystems 10 gemäß Fig. 2 die Rolle 11a wählen. Er klebt das freie Ende des Klebebandabschnitts 8a über die Klebeschicht 12a im rechten oberen Rahmeneck an und zieht die Rolle sodann mit der Hand nach unten, wobei die Rolle abgewickelt wird. Mit der anderen Hand kann er während dieser Bewegung gleichzeitig den Klebebandabschnitt 8a durch Herunterfahren mit der Hand an dem Rahmen ankleben. Es erfolgt also eine gleichförmige Bewegung von oben nach unten, was für den Handwerker sehr einfach zu bewerkstelligen ist.

Soll an der linken Rahmenseite ein Abdeck-Klebeband angebracht werden, beispielsweise dann, wenn rechtsseitig aufgrund eines hervorstehenden Fenstergriffs ein Klebeband 7a nicht montiert werden kann, so nimmt der Handwerker die Rolle 11 b und klebt diese im linken oberen Rahmeneck über die Klebeschicht 12b an. Aufgrund der Wickelrichtung der Rolle 11 b kann nun auch diese durch einfaches Bewegen der Rolle von oben nach unten abgewickelt werden, während der Handwerker gleichzeitig mit der freien Hand den Klebeabschnitt 8b gegen den Rahmen drücken kann. Es findet also hier die gleiche Bewegung zum Abrollen und Andrücken statt, wie rechtsseitig, nämlich von oben nach unten, was aus handhabungstechnischen Gründen wesentlich einfacher ist, als dies von unten nach oben zu bewerkstelligen. Dies ist mit dem erfindungsgemäßen Abdeck-Klebebandsystem oder der Abdeck-Klebebandeinheit bestehend aus den beiden unterschiedlich gewickelten Rollen 11a, 11 b möglich.

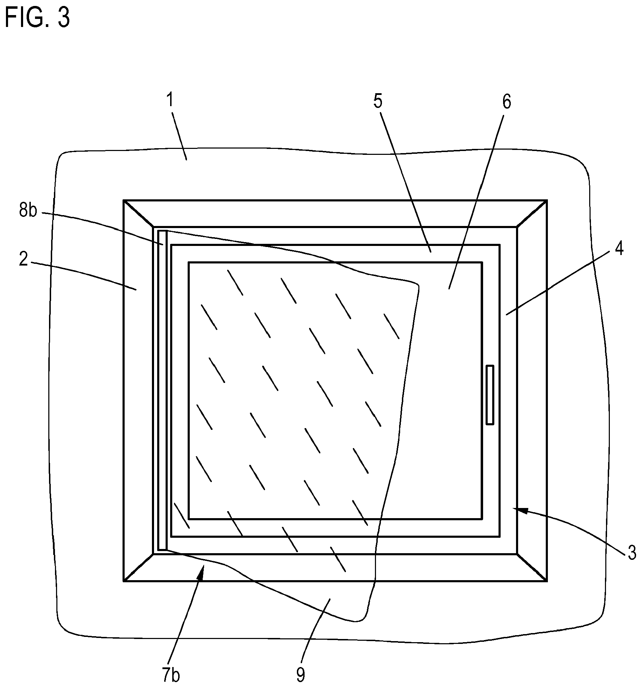

Fig. 3 zeigt eine solche Montagesituation eines Abdeck-Klebebandes 7b. Dort ist ersichtlich das Abdeck-Klebeband 7b linksseitig angebracht.

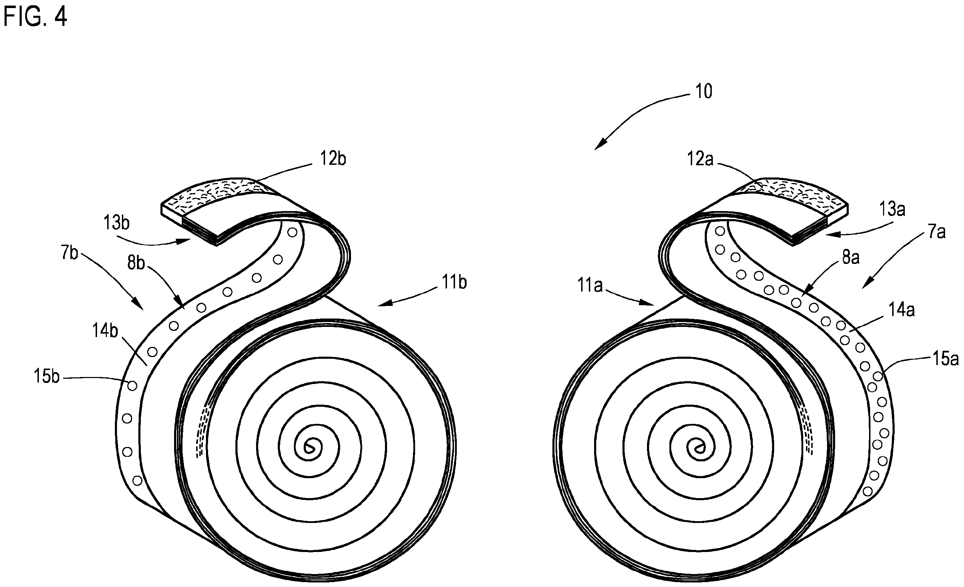

Fig. 4 zeigt schließlich eine weitere Ausführungsform eines erfindungsgemäßen Abdeck-Klebebandsystems 10, wobei die beiden Rollen 11a, 11 b genauso aufgebaut sind wie die Rollen 11 a, 11 b aus Fig. 2. Der einzige Unterschied ist, dass die jeweiligen Markierungen 15a, 15b in Fig. 4 nicht durch Buchstaben, sondern durch unterschiedliche Farben an den Außenseiten 14a, 14b der Klebebandabschnitte 8a, 8b realisiert sind, wie dies durch die verschieden dichten Punktierungen angedeutet ist. Die Außenseiten sind vorzugsweise vollständig unterschiedlich eingefärbt respektive unterschiedlich farbig, beispielsweise ist die Außenseite der Rolle 11a blau und die Außenseite der Rolle 11 b rot, wobei natürlich beliebig andere Farbkombinationen gewählt werden können. Wichtig ist lediglich, dass die Farben entsprechend zu unterscheiden sind.

Diese unterschiedliche Farbigkeit kann z.B. durch Verwendung von verschieden farbigen Gewebebändern, die die nicht klebende Seite des jeweiligen Klebebandabschnitts 8a, 8b bilden und die die Klebeschicht 12a, 12b tragen, erreicht werden. Solche Gewebebänder können mit beliebiger Farbgebung hergestellt werden, so dass ein Farbauftrag im Rahmen der Herstellung der jeweiligen Rolle 11 aa, 11 b nicht erforderlich ist.

Bezogen auf die Ausführungsform gemäß Fig. 2 können auch dort Gewebebänder verwendet werden, die die nicht klebende Außenseite des jeweiligen Klebebandabschnitts 8a, 8b bilden und die die Klebeschicht 12a, 12b tragen, und die von Haus aus mit der entsprechenden Markierung, hier z.B. dem jeweiligen Buchstaben, bedruckt sind.

## Patentansprüche

1. Abdeck-Klebebandsystem, umfassend zwei zu Rollen (11a, 11b) gewickelte Abdeck-Klebebänder (7a, 7b) jeweils umfassend einen Klebebandabschnitt (8a, 8b) mit einer eine Klebeschicht (12a, 12b) aufweisenden Seite und einen an dem Klebebandabschnitt (8a, 8b) angeordneten gefalteten Abdeckfolienabschnitt (13a, 13b), wobei die Abdeck-Klebebänder (7a, 7b) über die Klebeschicht (12a, 12b) an einem Drittgegenstand anklebbar sind, und wobei die Abdeck-Klebebänder (7a, 7b) mit unterschiedlichen Wickelrichtungen zu den beiden Rollen aufgewickelt sind.

2. Abdeck-Klebebandsystem nach Anspruch 1, **dadurch gekennzeichnet, dass** die nicht klebende Seite der Klebebandabschnitte (8a, 8b) auf die Außenseite der jeweiligen Rolle (11a, 11b) gewickelt ist.

3. Abdeck-Klebebandsystem nach Anspruch 1 oder 2, **dadurch gekennzeichnet, dass** an der nicht klebenden Seite (14a, 14b) eines Klebebandabschnitts (8a, 8b) oder beider Klebebandabschnitte (8a, 8b) und/oder einem Abdeckfolienabschnitt (13a, 13b) oder beiden Abdeckfolienabschnitten (13a, 13b) wenigstens eine Markierung (15a, 15b) vorgesehen ist.

4. Abdeck-Klebebandsystem nach Anspruch 3, **dadurch gekennzeichnet, dass** die an beiden Klebebandabschnitten (8a, 8b) und/oder beiden Abdeckfolienabschnitten (13a, 13b) vorgesehenen Markierungen (15a, 15b) der beiden Rollen (11 a, 11 b) unterschiedlich sind.

5. Abdeck-Klebebandsystem nach Anspruch 3 oder 4, **dadurch gekennzeichnet, dass** die oder jede Markierung (15a, 15b) in Form einer Farbe und/oder wenigstens eines Buchstabens und/oder wenigstens eines Symbols vorgesehen ist.

6. Abdeck-Klebebandsystem nach einem der vorangehenden Ansprüche, **dadurch gekennzeichnet, dass** die beiden Klebeschichten (12a, 12b) unterschiedlich gefärbt sind.

7. Abdeck-Klebebandsystem nach einem der vorangehenden Ansprüche, **dadurch gekennzeichnet, dass** die Klebebandabschnitte (8a, 8b) aus einem geschäumten Kunststoffmaterial oder einem Gewebeband sind, das einseitig mit der Klebeschicht (12a, 12b) oder einem doppelseitig klebenden Klebestreifen belegt ist.

8. Abdeck-Klebebandsystem nach Anspruch 7 und einem der Ansprüche 3 bis 6, **dadurch gekennzeichnet, dass** die Gewebebänder der beiden Abdeck-Klebebänder unterschiedliche Farben aufweisen und/oder wenigstens ein gewebeband eine Markierung in Form wenigstens eines Buchstabens und/oder wenigstens eines Symbols aufweist.

9. Abdeck-Klebebandsystem nach einem der vorangehenden Ansprüche, **dadurch gekennzeichnet, dass** die Klebeschicht (12a, 12b) aus einem Naturkautschuk ist.

10. Abdeck-Klebebandsystem nach einem der vorangehenden Ansprüche, **dadurch gekennzeichnet, dass** jeder Klebebandabschnitt (8a, 8b) eine Breite von wenigstens 10 mm bis maximal 50 mm aufweist.
